(19) Europäisches Patentamt
European Patent Office
Office européen des brevets

(11) Veröffentlichungsnummer: **0 428 482 B1**

(12) # EUROPÄISCHE PATENTSCHRIFT

(45) Veröffentlichungstag der Patentschrift: **31.05.95**

(51) Int. Cl.[6]: **C09B 62/085**, D06P 1/382

(21) Anmeldenummer: **90810850.9**

(22) Anmeldetag: **06.11.90**

Die Akte enthält technische Angaben, die nach dem Eingang der Anmeldung eingereicht wurden und die nicht in dieser Patentschrift enthalten sind.

(54) **Reaktivfarbstoffe, Verfahren zu deren Herstellung und deren Verwendung.**

(30) Priorität: **14.11.89 CH 4086/89**

(43) Veröffentlichungstag der Anmeldung:
**22.05.91 Patentblatt 91/21**

(45) Bekanntmachung des Hinweises auf die Patenterteilung:
**31.05.95 Patentblatt 95/22**

(84) Benannte Vertragsstaaten:
**BE CH DE ES FR GB IT LI**

(56) Entgegenhaltungen:
**FR-A- 2 368 521**
**GB-A- 899 376**

(73) Patentinhaber: **CIBA-GEIGY AG**
**Klybeckstrasse 141**
**CH-4002 Basel (CH)**

(72) Erfinder: **Seiler, Herbert, Dr.**
**Leimgrubenweg 60**
**CH-4125 Riehen (CH)**

**EP 0 428 482 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen, vielfach noch nicht voll befriedigen.

Die Aufgabe der vorliegenden Erfindung ist es, neue Reaktivfarbstoffe zu finden, die für Farbe- und Druckverfahren geeignet sind und die einen hohen Fixiergrad und zugleich eine gute Auswaschbarkeit der nichtfixierten Anteile haben; ferner sollen die Farbstoffe allgemein gute Echtheiten und insbesondere einen Farbton im Rotbereich besitzen.

Aus der GB-A 899 376 sind bereits Farbstoffe der unten angegebenen Formel (1) bekannt, worin Z ein gegebenenfalls im Phenylteil substituierter Anilinorest -NH-Phenyl ist. Die FR-A 2 368 521 offenbart Farbstoffe der unten angegebenen Formel (1) mit einem aliphatischen Rest Z. Die aus den genannten Dokumenten bekannten Farbstoffe vermögen jedoch nicht alle Wünsche bezüglich Applikation und Echtheiten zu erfüllen. Es hat sich gezeigt, dass die weiter unten definierten neuen Farbstoffe die gestellte Aufgabe weitgehend erfüllen.

Gegenstand der Erfindung sind daher Reaktivfarbstoffe der Formel

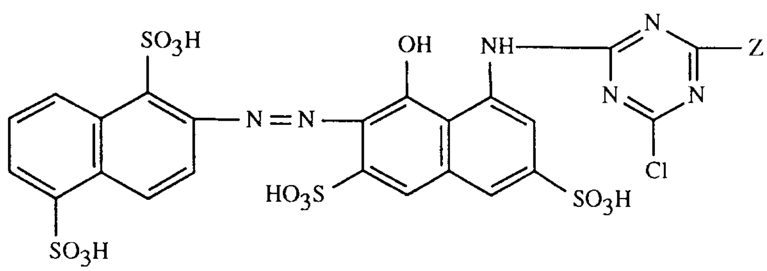 (1),

worin Z ein Rest der Formel

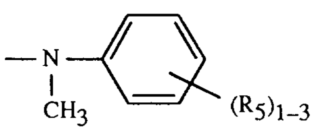 (1d), 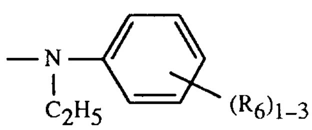 (1e) oder

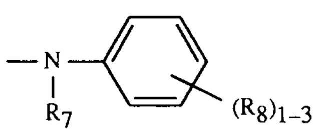 (1f)

ist, $(R_5)_{1-3}$ für 1 bis 3 Substituenten $R_5$, unabhängig voneinander, aus der Gruppe Wasserstoff, $C_1$-$C_4$-Alkyl, $C_1$-$C_4$-Alkoxy, Carboxy und Halogen steht, $(R_6)_{1-3}$ entweder für einen Substituenten $R_6$ aus der Gruppe $C_2$-$C_4$-Alkyl, $C_1$-$C_4$-Alkoxy, Carboxy und Halogen, oder für 2 oder 3 Substituenten $R_6$, unabhängig voneinander, aus der Gruppe $C_1$-$C_4$-Alkyl, $C_1$-$C_4$-Alkoxy, Carboxy und Halogen steht, $R_7$ $C_1$-$C_4$-Alkyl ist, das durch Halogen, Hydroxy, Cyan, Carboxy, $C_1$-$C_4$-Alkoxy, Hydroxy-$C_2$-$C_4$-alkoxy, Sulfo oder Sulfato substituiert ist, und $(R_8)_{1-3}$ für 1 bis 3 Substituenten $R_8$, unabhängig voneinander, aus der Gruppe Wasserstoff, $C_1$-$C_4$-Alkyl, $C_1$-$C_4$-Alkoxy, Carboxy und Halogen steht.

Bedeuten $R_5$, $R_6$, $R_7$ und $R_8$ $C_1$-$C_4$-Alkyl so kommt Methyl, Aethyl, Isopropyl, n-Propyl, sek.-Butyl, Isobutyl, tert.-Butyl und n-Butyl in Betracht, wobei $R_7$ wie oben angegeben substituiert ist, wobei für $C_1$-$C_4$-Alkoxy und Halogen z.B. die unten genannten Substituenten in Betracht kommen und Beispiele für Hydroxy-$C_2$-$C_4$-alkoxy $\beta$-Hydroxyäthoxy, $\beta$-Hydroxypropoxy und $\gamma$-Hydroxypropoxy sind.

Bedeuten $R_5$, $R_6$ und $R_8$ $C_1$-$C_4$-Alkoxy so kommt Methoxy, Aethoxy, Isopropoxy, n-Propoxy, sek.-Butoxy, Isobutoxy, tert.-Butoxy und n-Butoxy in Betracht.

Bedeuten $R_5$, $R_6$ und $R_8$ Halogen so kommt z.B. Fluor, Brom und insbesondere Chlor in Betracht.

Bevorzugt sind Reaktivfarbstoffe der Formel (1), worin

- Z ein Rest der Formel (1d) ist, und $(R_5)_{1-3}$ für 1 bis 3 Substituenten, unabhängig voneinander, aus der Gruppe Wasserstoff, $C_1$-$C_2$-Alkyl, $C_1$-$C_2$-Alkoxy, Carboxy und Chlor steht;
- Z ein Rest der Formel (1e) ist, und $(R_6)_{1-3}$ entweder für einen Substituenten aus der Gruppe Aethyl, $C_1$-$C_2$-Alkoxy, Carboxy und Chlor, oder für 2 oder 3 Substituenten $R_6$, unabhängig voneinander, aus der Gruppe $C_1$-$C_2$-Alkyl, $C_1$-$C_2$-Alkoxy, Carboxy und Chlor steht; oder
- Z ein Rest der Formel (1f) ist, $R_7$ die unter Formel (1) angegebene Bedeutung hat, und $(R_8)_{1-3}$ für 1 bis 3 Substituenten $R_8$, unabhängig voneinander, aus der Gruppe Wasserstoff, $C_1$-$C_2$-Alkyl, $C_1$-$C_2$-Alkoxy, Carboxy und Chlor steht.

Besonders bevorzugt sind Reaktivfarbstoffe der Formel (1), worin Z ein Rest der Formel

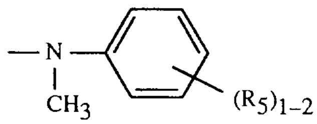

ist, und $(R_5)_{1-2}$ für 1 bis 2 Substituenten $R_5$, unabhängig voneinander, aus der Gruppe Wasserstoff, Methyl, Methoxy und Chlor steht.

Ganz besonders bevorzugt sind Reaktivfarbstoffe der Formel (1), worin Z ein Rest der Formel

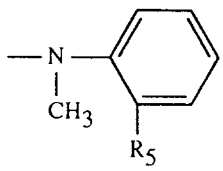

ist, und $R_5$ Wasserstoff oder Methyl bedeutet.

Interessant sind ferner Reaktivfarbstoffe der Formel (1), worin Z N-Methylanilino, N-Methyl-o-toluidino, N-Methyl-m-toluidino, N-Methyl-p-toluidino, N-Methyl-2-äthylanilino, N-Methyl-4-chloranilino, N-Methyl-2,5-dimethylanilino, N-Methyl-3,4-dimethylanilino, N-Methyl-2,5-dimethoxyanilino, N-Aethyl-2-äthylanilino, N-Aethyl-2-chloranilino, N-Aethyl-4-chloranilino, N-Aethyl-2,5-dimethylanilino, N-Aethyl-2,5-dimethoxyanilino, N-Sulfomethylanilino, N-$\beta$-Hydroxyäthylanilino, N-$\beta$-Chloräthylanilino, N-$\beta$-Cyanäthylanilino, N-$\beta$-Hydroxy-äthyl-o-toluidino, N-$\beta$-Sulfatoäthylanilino, N-$\beta$-Sulfatoäthyl-o-toluidino, N-$\beta$-Hydroxy-n-propylanilino, N-$\beta$-Hydroxy-n-butylanilino, N-$\beta$-Hydroxy-n-butyl-2-chloranitino, N-Aethyl-m-toluidino, N-Aethyl-o-toluidino oder N-Aethyl-p-toluidino ist.

Die Farbstoffe der Formel (1) sind faserreaktiv, da sie im s-Triazinrest ein abspaltbares Chloratom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man eine diazotierte Diazokomponente der Formel

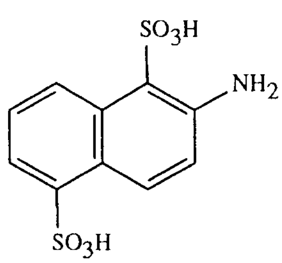

(2),

eine Kupplungskomponente der Formel

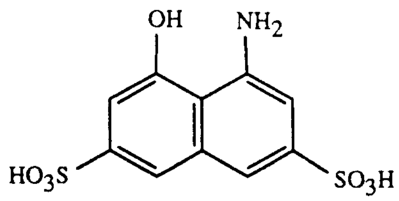

(3),

2,4,6-Trichlor-s-triazin und ein Amin der Formel

H-Z (4),

worin Z die unter Formel (1) angegebene Bedeutung hat, durch Kupplung und Kondensation in beliebiger Reihenfolge zu einem Reaktivfarbstoff der Formel (1) umsetzt.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten frei gewählt werden kann.

Wichtige Ausführungsformen des erfindungsgemässen Verfahrens sind dadurch gekennzeichnet, dass man

1) eine diazotierte Aminoverbindung der Formel (2) mit einer Kupplungskomponente der Formel (3) zu einer Azoverbindung kuppelt, die Azoverbindung mit 2,4,6-Trichlor-s-triazin kondensiert und das erhaltene primäre Kondensationsprodukt mit einer Aminoverbindung der Formel (4) zu einem Reaktivfarbstoff der Formel (1) kondensiert;

2) eine diazotierte Aminoverbindung der Formel (2) mit einer Kupplungskomponente der Formel (3) zu einer Azoverbindung kuppelt, dass man ferner 2,4,6-Trichlor-s-triazin mit einer Aminoverbindung der Formel (4) kondensiert und das erhaltene primäre Kondensationsprodukt mit der oben erwähnten Azoverbindung zu einem Reaktivfarbstoff der Formel (1) kondensiert;

3) eine Kupplungskomponente der Formel (3) mit 2,4,6-Trichlor-s-triazin kondensiert, das erhaltene primäre Kondensationsprodukt mit einer Aminoverbindung der Formel (4) kondensiert und das entstandene sekundäre Kondensationsprodukt mit einer diazotierten Aminoverbindung der Formel (2) zu einem Reaktivfarbstoff der Formel (1) kuppelt;

4) eine Kupplungskomponente der Formel (3) mit 2,4,6-Trichlor-s-triazin kondensiert, auf das erhaltene primäre Kondensationsprodukt eine diazotierte Aminoverbindung der Formel (2) kuppelt und die erhaltene Azoverbindung mit einer Aminoverbindung der Formel (4) zu einem Reaktivfarbstoff der Formel (1) kondensiert;

5) 2,4,6-Trichlor-s-triazin mit einer Aminoverbindung der Formel (4) kondensiert, das erhaltene primäre Kondensationsprodukt mit einer Kupplungskomponente der Formel (3) kondensiert und auf das entstandene sekundäre Kondensationsprodukt eine diazotierte Aminoverbindung der Formel (2) kuppelt, so dass ein Reaktivfarbstoff der Formel (1) erhalten wird.

Als Ausgangsstoffe, die zur Herstellung der Reaktivfarbstoffe der Formel (1) verwendet werden können, seien genannt:

<u>Aminoverbindung der Formel (2), Diazokomponente</u>

2-Amino-1,5-disulfonaphthalin.

<u>Kupplungskomponente der Formel (3)</u>

1-Amino-8-hydroxynaphthalin-3,6-disulfonsäure

<u>2,4,6-Trichlor-s-triazin</u>

<u>Amine der Formel (4)</u>

N-Methyl-o-toluidin, N-Methyl-m-toluidin, N-Methyl-p-toluidin, N-Methyl-2-äthylanilin, N-Methyl-4-chloranilin, N-Methyl-2,5-dimethylanilin, N-Methyl-3,4-dimethylanilin, N-Methyl-2,5-dimethoxyanilin, N-Aethyl-2-äthylanilin, N-Aethyl-2-chloranilin, N-Aethyl-4-chloranilin, N-Aethyl-2,5-dimethylanilin, N-Aethyl-2,5-dimethoxyanilin, N-Sulfomethylanilin, N-$\beta$-Hydroxyäthylanilin, N-$\beta$-Chloräthylanilin, N-$\beta$-Cyanäthylanilin, N-$\beta$-Hydroxyäthyl-o-toluidin, N-$\beta$-Sulfatoäthylanilin, N-$\beta$-Sulfatoäthyl-o-toluidin, N-$\beta$-Hydroxy-n-propylanilin, N-$\beta$-Hydroxy-n-butylanilin und N-$\beta$-Hydroxy-n-butyl-2-chloranilin, N-Aethyl-m-toluidin, N-Aethyl-o-toluidin und N-Aethyl-p-toluidin.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor-s-triazins mit den Aminomonoazoverbindungen und den Aminoverbindungen der Formel (4) erfolgen vorzugsweise in wassriger Lösung oder Suspension, bei niedriger Temperatur und bei schwach saurem, neutralem bis schwach alkalischen, pH-Wert, so dass im fertigen Reaktivfarbstoff der Formel (1) noch ein Chloratom als abspaltbarer Rest übrig bleibt. Vorteilhaft wird der bei der Kondensation freiwerdende Chlorwasserstoff laufend durch Zugabe wässriger Alkalihydroxide, -carbonate oder -bicarbonate neutralisiert. Auf eine Isolierung der Dichlortriazin-Azoverbindung wird im allgemeinen verzichtet.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Gegenstand der Erfindung sind ferner lagerstabile, konzentrierte flüssige Farbstoffpräparationen der Reaktivfarbstoffe der Formel (1) sowie ihre Verwendung zur Herstellung von Klotzflotten, Färbebädem und vor allem Druckpasten, die zum Färben und Bedrucken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung beim Ansetzen von Druckpasten sowie von Klotz- und Färbeflotten, keine Benetzungsprobleme durch Klumpenbildung , keine fleckigen Färbungen durch ungelöste Farbstoffpartikel. Solche flüssige Formulierungen sollten hoch konzentriert (mindestens 10 Gew.-% und vorzugsweise mehr als 15 Gew.-% Farbstoffgehalt) und mindestens über mehrere Monate in einem breiten Temperaturbereich (-10 bis +40 °C) unverändert haltbar sein.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press- oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -Suspensionen, die 2 bis 50 % Farbstoff enthalten.

Man kann aber auch von dem trockenen Rohfarbstoffpulver ausgehen, wenn man es zunächst mit Wasser anschlämmt.

Die erfindungsgemässen, konzentrierten flüssigen Präparationen enthalten vorzugsweise 20 bis 50 Gewichtsprozent, insbesondere 30 bis 50 Gewichtsprozent Farbstoff.

Bei den erfindungsgemässen, konzentrierten flüssigen Präparationen handelt es sich in der Regel um echte oder kolloidale Lösungen. Sie sind dünnflüssig (Viskosität von etwa 5 bis 300 cp/20 °C) und gut lagerstabil, d.h. sie bleiben mindestens mehrere Monate bei Temperaturen von -20 bis +60 °C, insbesondere -10 bis +40 °C in gebrauchsfähigem Zustand. Diese Präparationen können bei der Herstellung von Klotzflotten, Färbebädem und Druckpasten sowohl mit Wasser als auch mit organischen Lösungsmitteln und/oder Verdickungsmittel versetzt werden, ohne dass der Farbstoff ausfällt oder dass es zu anderen Inhomogenitäten kommt. Mit den genannten Klotzflotten, Färbebädem und Druckpasten kann man z.B. Textilmaterialien aus natürlichen oder synthetischen, insbesondere cellulose-haltigen Fasermaterialien in bekannter Weise färben oder bedrucken.

Besonders geeignet sind die erfindungsgemässen stabilen konzentrierten flüssigen Farbstoffpräparationen zur Herstellung von Druckpasten für das Bedrucken von Cellulose-Fasermaterialien sowie für kontinuierliche Färbeverfahren.

Ein Verfahren zur Herstellung einer erfindungsgemässen flüssigen Präparation ist z.B. aus der EP-A-0 333 656 bekannt, worin auf einer Anlage für Umkehr-Osmose die Farbstofflösung entsalzt und aufkonzentriert wird.

Die Anwendung membrangebundener Filtriertechniken zur Herstellung von Zubereitungen wasserlöslicher organischer Farbstoffe ist bekannt. Das Verfahren geht von den wässrigen Suspensionen des

Rohfarbstoffs aus, die mit Hilfe eines ersten Membrantrennverfahrens weitgehend von in Wasser löslichen Nebenprodukten befreit und deren Salzgehalt auf etwa die Hälfte verringert werden; dann folgt ein zweites Membrantrennverfahren.

In diesem ersten Membrantrennverfahren permeieren also die löslichen Nebenprodukte und ein Teil der Salze durch ein Membran, während der Farbstoff und in Wasser unlösliche Anteile zurückgehalten werden.

In dem zweiten Membrantrennverfahren wird dann die Farbstoffsuspension - gegebenenfalls nach einer Verdünnung mit Wasser - entsalzt und aufkonzentriert und schliesslich in eine verkaufsfertige flüssige oder feste Farbstoffzubereitung übergeführt.

Die erfindungsgemäss eingesetzten Farbstofflösungen haben in der Regel einen Farbstoffgehalt von 5 bis 20 Gew.-% und einen Salzgehalt (anorganische Salze) von 1 bis 20 Gew.-%, insbesondere 1 bis 10 Gew.-%. Der pH-Wert liegt in der Regel im Bereich von 3 bis 10, vorzugsweise 3 bis 9. Unlösliche Anteile werden durch Mikrofiltration abgetrennt, die Aufkonzentrierung und Entsalzung wird so lange durchgeführt, bis ein Farbstoffgehalt von 10 bis 50 Gew.-% erreicht ist. Der Salzgehalt sinkt dabei unter 5 Gew.-%, z.B. 0,05 bis 5 Gew.-%, und vorzugsweise unter 1 Gew.-%, z.B. 0,05 bis 1 Gew.-%.

Zur Herstellung einer handelsfertigen Flüssigform ist die konzentrierte wässrige Farbstoffzubereitung gegebenenfalls nach Zugabe von den für Flüssigformulierungen üblichen Komponenten, wie Lösungsvermittlern, schaumdämpfenden Mitteln, Gefrierschutzmitteln, Feuchthaltemitteln, Tensiden, Puffersubstanzen und/oder Antimikrobika und Einstellen des pH-Wertes, nur noch durch Verdünnen und/oder mit Hilfe von Coupagemitteln auf einen vorgegebenen Endfarbstoffgehalt zu bringen. Die Farbstoffzubereitung kann aber auch, gegebenenfalls nach Zugabe von Zusätzen, wie Bindemitteln, Entstäubungsmitteln, Netzmitteln, Puffersubstanzen, wie Alkalipolyphosphaten, Dinatriumhydrogenphosphat, Zitronensäure und/oder Ethylendiamintetraessigsäure, und/oder Coupagemitteln, durch Wasserentzug, in ein festes Farbstoffpräparat übergeführt werden. Dank der erhöhten Farbstoffkonzentration benötigt man weniger Energie zum Trocknen. Man verwendet übliche Trocknungsverfahren, insbesondere die Sprühtrocknung.

Der pH-Wert der handelsfertigen Flüssigformulierung der Reaktivfarbstoffe wird in der Regel durch Zugabe von Fuffersubstanzen eingestellt. Der pH-Wert liegt etwa im Bereich 7,0 bis 8,5, vorzugsweise 8,0.

Die genannten Hilfs- oder Zusatzmittel können der Farbstofflösung natürlich nicht nur vor deren endgültiger Formulierung als Handelsform zugesetzt, sondern bereits vor oder während des erfindungsgemässen Verfahrens in die Lösung des Rohfarbstoffs eingebracht werden und sind damit wenigstens teilweise bereits in der Farbstofflösung, aus der die endgültige handelsfertige Farbstoffformulierung hergestellt wird, vorhanden (z.B. Lösungsvermittler, Lösungsmittel, Tenside etc.). Eine Zugabe während des Verfahrens ist selbstverständlich nur dann sinnvoll, wenn das oder die Hilfs- oder Zusatzmittel nicht durch eines der Membrantrennverfahren wieder vollständig aus der Lösung entfernt werden.

Die erfindungsgemässen, konzentrierten flüssigen Präparationen der Reaktivfarbstoffe der Formel (1) enthalten somit 10 bis 50 Gewichtsprozent Farbstoff, 0,05 bis 5 Gewichtsprozent eines anorganischen Salzes, z.B. NaCl, KCl, LiCl, soviel Puffersubstanzen, z.B. Mono- und Dinatriumphosphat oder Natriumtripolyphosphat oder Mischungen von Puffersubstanzen, so dass ein pH-Wert zwischen 7,0 und 8,5 eingestellt werden kann, sowie Wasser.

Die Reaktivfarbstoffe der Formel (1) zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Sie eignen sich vor allem zum Bedrucken von textilen cellulosehaltigen Fasermaterialien, insbesondere Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittels, zu unterwerfen.

Bei der Anwendung in der Praxis werden die erfindungsgemässen Farbstoffe vorteilhaft als flüssige Färbe- oder Druckpräparate eingesetzt.

Die erfindungsgemässen Farbstoffe liegen entweder in der Form ihrer freien Sulfonsäure oder vorzugsweise als deren Salze vor.

Als Salze kommen beispielsweise die Alkali-, Erdalakali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 31,9 g 1-Amino-8-hydroxynaphthalin-3,6-disulfonsäure werden unter Zugabe von 50 ml 2n-Natriumhydroxydlösung in 100 ml Wasser gelöst. Die Lösung lässt man langsam zu einer eiskalten Suspension von 18,5 g 2,4,6-Trichlor-1,3,5-triazin in 200 ml Wasser tropfen. Dann werden im Verlauf von 2 bis 3 Stunden 50 ml 2n-Natriumhydroxydlösung in der Weise zugegeben, dass der pH-Wert des Reaktionsgemisches stets um 1 bleibt. Dem so erhaltenen primären Kondensationsprodukt gibt man eine wässrige, salzsaure Lösung von 10,7 g N-Methylaminobenzol zu. Der pH-Wert wird mit 2n-Natriumhydroxydlösung bei 3 bis 4 gehalten. Die Temperatur lässt man langsam auf 35° ansteigen.

30,3 g 2-Naphthylamin-1,5-disulfonsäure werden in Gegenwart von Salzsäure und 6,9 g Natriumnitrit in üblicher Weise diazotiert. Man gibt nun bei 0 bis 5° die Diazoverbindung zur oben hergestellten Suspension der reaktiven Kupplungskomponente und hält im Kupplungsgemisch den pH-Wert mit 20%iger Natriumcarbonatlösung bei 7 bis 8. Man rührt eine Stunde nach und lässt dann die Temperatur auf 20° ansteigen. Der Farbstoff wird durch Zugabe von Natriumchlorid ausgesalzen, abfiltriert, gewaschen und im Vakuum bei 40° getrocknet. Als freie Säure entspricht der Farbstoff der Formel

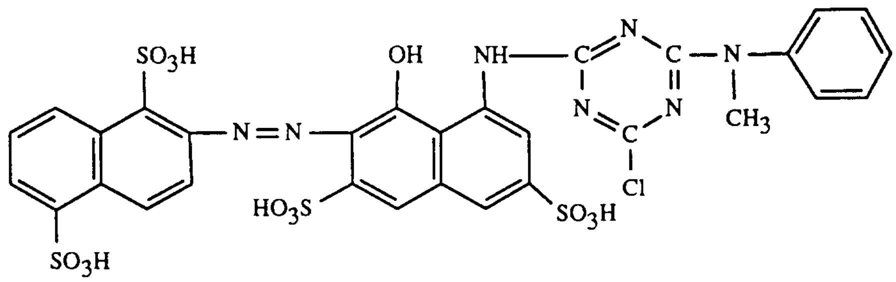

(101)

und färbt Baumwolle in blaustichig roten Tönen.

Eine weitere Herstellungsmöglichkeit besteht darin, dass man das saure, primäre Kondensationsprodukt aus 1-Amino-8-hydroxynaphthalin-3,6-disulfonsäure und 2,4,6,-Trichlor-1,3,5-triazin bei 5 bis 15° und einem pH-Wert von 7 zu einer einen Emulgator enthaltenden Emulsion von N-Methylaminobenzol und Wasser gibt. Nach 1,5 Stunden ist die Kondensation beendet und man verfährt zur Herstellung des Farbstoffes wie im Beispiel 1 beschrieben. Auf diese Weise wird der Farbstoff in gleicher Reinheit und gleicher Ausbeute wie nach Beispiel 1 erhalten.

Wenn man nach den Angaben von Beispiel 1 verfährt, jedoch für den Austausch des zweiten Chloratoms am Triazinring anstelle des N-Methylanilins äquivalente Mengen der in der zweiten Spalte angegebenen Amine verwendet, so erhält man gleichfalls wertvolle Farbstoffe, die Baumwolle in roten Nuancen färben.

| Beispiel Nr. | Amin | Farbton |
|---|---|---|
| 2 | N-Methyl-o-toluidin | rot |
| 3 | N-Methyl-m-toluidin | rot |
| 4 | N-Methyl-p-toluidin | rot |
| 5 | N-Methyl-2-äthylanilin | rot |
| 6 | N-Methyl-4-chloranilin | rot |
| 7 | N-Methyl-2,5-dimethylanilin | rot |
| 8 | N-Methyl-3,4-dimethylanilin | rot |
| 9 | N-Methyl-2,5-dimethoxyanilin | rot |
| 10 | N-Aethyl-2-äthylanilin | rot |
| 11 | N-Aethyl-2-chloranilin | rot |
| 12 | N-Aethyl-4-chloranilin | rot |
| 13 | N-Aethyl-2,5-dimethylanilin | rot |

| | | |
|---|---|---|
| 14 | N-Aethyl-2,5-dimethoxyanilin | rot |
| 15 | N-Sulfomethylanilin | rot |
| 16 | N-β-Hydroxyäthylanilin | rot |
| 17 | N-β-Chloräthylanilin | rot |
| 18 | N-β-Cyanäthylanilin | rot |
| 19 | N-β-Hydroxyäthyl-o-toluidin | rot |
| 20 | N-β-Sulfatoäthylanilin | rot |
| 21 | N-β-Sulfatoäthyl-o-toluidin | rot |
| 22 | N-β-Hydroxy-n-propylanilin | rot |
| 23 | N-β-Hydroxy-n-butylanilin | rot |
| 24 | N-β-Hydroxy-n-butyl-2-chloranilin | rot |
| 25 | 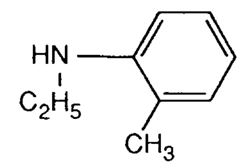 | rot |
| 26 | 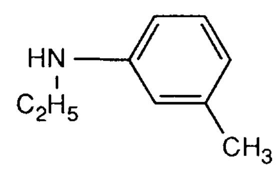 | rot |
| 27 | 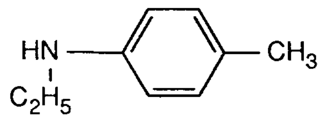 | rot |

Färbevorschrift 1

2 Teile des gemäss Beispiel 1 erhaltenen Farbstoffes werden unter Zusatz von 5 bis 20 Teilen Harnstoff und 2 Teilen wasserfreiem $Na_2CO_2$ in 100 Teilen Wasser bei 20 bis 50 °C gelöst. Mit der erhaltenen Lösung wird ein Baumwollgewebe imprägniert, so dass es um 60 bis 80 % seines Gewichtes zunimmt, und dann getrocknet. Danach wird während 1 1/2 bis 5 Minuten bei 140 bis 210 °C thermofixiert, dann während einer Viertelstunde in einer 0,1%-igen Lösung eines ionenfreien Waschmittels bei Siedetemperatur geseift, gespült und getrocknet.

Färbevorschrift 2

2 Teile des gemäss Beispiel 1 erhaltenen Farbstoffes werden in 2000 Teilen Wasser unter Zusatz von 120 Teilen NaCl oder wasserfreiem $Na_2SO_4$ bei 75 °C gelöst. Man geht mit 100 Teilen eines Baumwollgewebes in dieses Färbebad ein und hält die Temperatur während 30 bis 60 Minuten konstant. Danach werden 10 Teile wasserfreies $Na_2CO_3$ Soda und 4 ml Natronlauge (36%-ig) zugegeben. Die Temperatur wird weitere 45 bis 60 Minuten bei 75 bis 80 °C gehalten, dann wird während 15 Minuten in einer 0,1%-igen Lösung eines ionenfreien Waschmittels bei Siedetemperatur geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Danach imprägniert man das Gewebe mit einer 20 °C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101 °C, spült, seift während einer Viertelstunde in einer 0,3%-igen Lösung eines ionenfreien Waschmittels bei Siedetemperatur, spült und trocknet.

Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60 °C, wobei nach 30 Minuten 40 Teile wasserfreies $Na_2CO_3$ und nochmals 60 Teile Natriumchlorid zugegeben werden. Man erhält die Temperatur 30 Minuten bei 60 °C, spült und seift dann die Färbung während 15 Minuten in einer 0,3%-igen Lösung eines ionenfreien Waschmittels bei Siedetemperatur, spült und trocknet.

Druckvorschrift 1

2 Teile des gemäss Beispiel 1 hergestellten Farbstoffes werden unter schnellem Rühren in 100 Teile einer Stammverdickung, enthaltend 45 Teile 5%-ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100 °C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

Druckvorschrift 2

6 Teile des Reaktivfarbstoffes der Formel (101) aus Beispiel 1 werden unter schnellem Rühren in 94 Teile einer Stammverdickung, enthaltend 50 Teile 5 prozentige Natriumalginat-Verdickung, 39,4 Teile Wasser, 3,5 Teile Natriumpropionat, 1 Teil m-nitrobenzolsulfonsaures Natrium sowie 0,1 Teil 4-prozentige wässrige Formaldehyd-Lösung, eingestreut. Mit der so erhaltenen Druckpaste bedruckt man ein mercerisiertes Baumwollgewebe, trocknet und dämpft den erhaltenen bedruckten Stoff 8 Minuten bei 103 °C im Sattdampf. Das bedruckte Gewebe wird dann gespült und anschliessend getrocknet. Es wird ein roter Druck erhalten.

**Patentansprüche**
**Patentansprüche für folgende Vertragsstaaten : BE, CH, DE, FR, GB, IT, LI**

**1.** Reaktivfarbstoffe der Formel

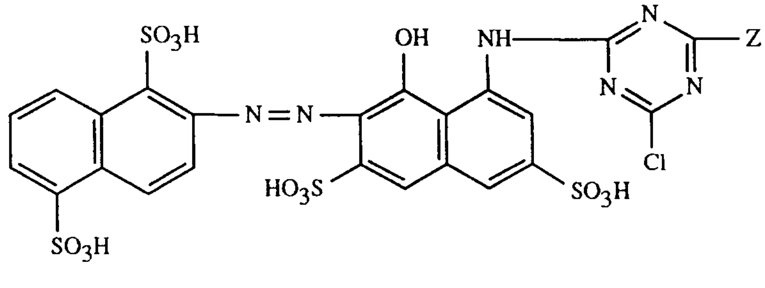

(1),

worin Z ein Rest der Formel

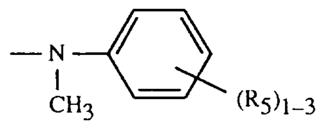 (1d), 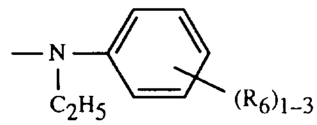 (1e) oder

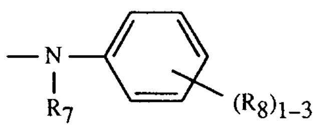 (1f)

ist, $(R_5)_{1-3}$ für 1 bis 3 Substituenten $R_5$, unabhängig voneinander, aus der Gruppe Wasserstoff, $C_1$-$C_4$-Alkyl, $C_1$-$C_4$-Alkoxy, Carboxy und Halogen steht, $(R_6)_{1-3}$ entweder für einen Substituenten $R_6$ aus der Gruppe $C_2$-$C_4$-Alkyl, $C_1$-$C_4$-Alkoxy, Carboxy und Halogen, oder für 2 oder 3 Substituenten $R_6$, unabhängig voneinander, aus der Gruppe $C_1$-$C_4$-Alkyl, $C_1$-$C_4$-Alkoxy, Carboxy und Halogen steht, $R_7$ $C_1$-$C_4$-Alkyl ist, das durch Halogen, Hydroxy, Cyan, Carboxy, $C_1$-$C_4$-Alkoxy, Hydroxy-$C_2$-$C_4$-alkoxy, Sulfo oder Sulfato substituiert ist, und $(R_8)_{1-3}$ für 1 bis 3 Substituenten $R_8$, unabhängig voneinander, aus der Gruppe Wasserstoff, $C_1$-$C_4$-Alkyl, $C_1$-$C_4$-Alkoxy, Carboxy und Halogen steht.

**2.** Reaktivfarbstoffe gemäss Anspruch 1, worin Z ein Rest der Formel (1d) ist, und $(R_5)_{1-3}$ für 1 bis 3 Substituenten $R_5$, unabhängig voneinander, aus der Gruppe Wasserstoff, $C_1$-$C_2$-Alkyl, $C_1$-$C_2$-Alkoxy, Carboxy und Chlor steht.

**3.** Reaktivfarbstoffe gemäss Anspruch 1, worin Z ein Rest der Formel (1e) ist, und $(R_6)_{1-3}$ entweder für einen Substituenten aus der Gruppe Aethyl, $C_1$-$C_2$-Alkoxy, Carboxy und Chlor, oder für 2 oder 3 Substituenten $R_6$, unabhängig voneinander, aus der Gruppe $C_1$-$C_2$-Alkyl, $C_1$-$C_2$-Alkoxy, Carboxy und Chlor steht.

**4.** Reaktivfarbstoffe gemäss Anspruch 1, worin Z ein Rest der Formel (1f) ist, $R_7$ die unter Formel (1) angegebene Bedeutung hat, und $(R_8)_{1-3}$ für 1 bis 3 Substituenten $R_8$, unabhängig voneinander, aus der Gruppe Wasserstoff, $C_1$-$C_2$-Alkyl, $C_1$-$C_2$-Alkoxy, Carboxy und Chlor steht.

**5.** Reaktivfarbstoffe gemäss Anspruch 2, worin Z ein Rest der Formel

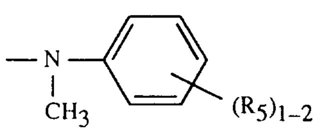

ist, und $(R_5)_{1-2}$ für 1 bis 2 Substituenten $R_5$, unabhängig voneinander, aus der Gruppe Wasserstoff, Methyl, Methoxy und Chlor steht.

**6.** Reaktivfarbstoffe gemäss Anspruch 5, worin Z ein Rest der Formel

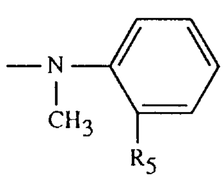

ist, und $R_5$ Wasserstoff oder Methyl bedeutet.

**7.** Verfahren zur Herstellung von Reaktivfarbstoffen der Formel (1) gemäss Anspruch 1, dadurch gekennzeichnet, dass man eine diazotierte Diazokomponente der Formel

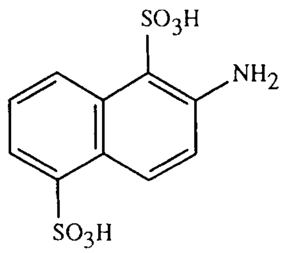

(2),

eine Kupplungskomponente der Formel

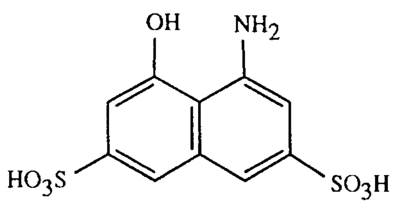

(3),

2,4,6-Trichlor-s-triazin und ein Amin der Formel

H-Z (4),

worin Z die in Anspruch 1 angegebene Bedeutung hat, durch Kupplung und Kondensation in beliebiger Reihenfolge zu einem Reaktivfarbstoff der Formel (1) umsetzt.

8. Verwendung der Reaktivfarbstoffe gemäss Anspruch 1 zum Färben oder Bedrucken von textilen Fasermaterialien.

9. Verwendung gemäss Anspruch 8 zum Färben oder Bedrucken von Baumwolle.

10. Lagerstabile, konzentrierte flüssige Farbstoffpräparationen von wasserlöslichen faserreaktiven Farbstoffen gemäss Anspruch 1.

**Patentansprüche für folgenden Vertragsstaat : ES**

1. Verfahren zur Herstellung von Reaktivfarbstoffen der Formel

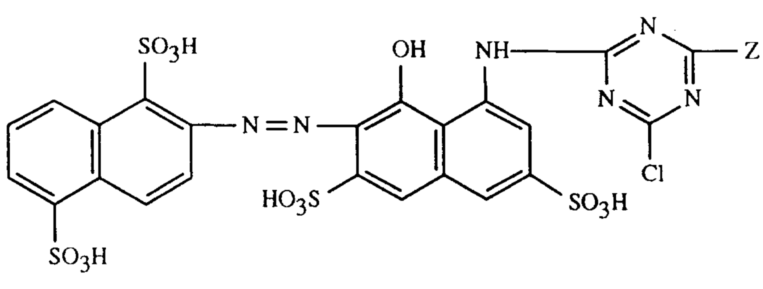

(1),

worin Z ein Rest der Formel

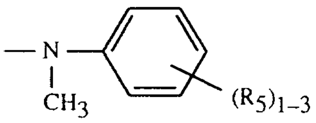 (1d), 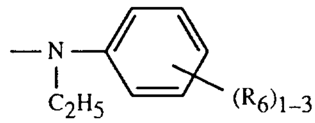 (1e) oder

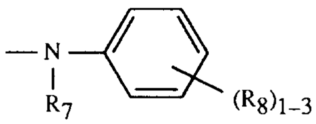 (1f)

ist, , $(R_5)_{1-3}$ für 1 bis 3 Substituenten $R_5$, unabhängig voneinander, aus der Gruppe Wasserstoff, $C_1$-$C_4$-Alkyl, $C_1$-$C_4$-Alkoxy, Carboxy und Halogen steht, $(R_6)_{1-3}$ entweder für einen Substituenten $R_6$ aus der Gruppe $C_2$-$C_4$-Alkyl, $C_1$-$C_4$-Alkoxy, Carboxy und Halogen, oder für 2 oder 3 Substituenten $R_6$, unabhängig voneinander, aus der Gruppe $C_1$-$C_4$-Alkyl, $C_1$-$C_4$-Alkoxy, Carboxy und Halogen steht, $R_7$ $C_1$-$C_4$-Alkyl ist, das durch Halogen, Hydroxy, Cyan, Carboxy, $C_1$-$C_4$-Alkoxy, Hydroxy-$C_2$-$C_4$-alkoxy, Sulfo oder Sulfato substituiert ist, und $(R_8)_{1-3}$ für 1 bis 3 Substituenten $R_8$, unabhängig voneinander, aus der Gruppe Wasserstoff, $C_1$-$C_4$-Alkyl, $C_1$-$C_4$-Alkoxy, Carboxy und Halogen steht, dadurch gekennzeichnet, dass man eine diazotierte Diazokomponente der Formel

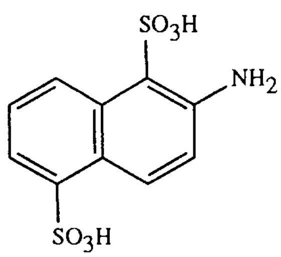

(2),

eine Kupplungskomponente der Formel

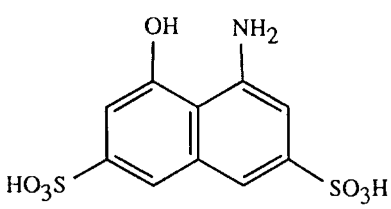

(3),

2,4,6-Trichlor-s-triazin und ein Amin der Formel

H-Z (4),

worin Z die in Anspruch 1 angegebene Bedeutung hat, durch Kupplung und Kondensation in beliebiger Reihenfolge zu einem Reaktivfarbstoff der Formel (1) umsetzt.

**2.** Verfahren gemäss Anspruch 1, dadurch gekennzeichnet, dass man ein Amin der Formel (4) verwendet, worin Z ein Rest der Formel (1d) ist, und $(R_5)_{1-3}$ für 1 bis 3 Substituenten $R_5$, unabhängig voneinander, aus der Gruppe Wasserstoff, $C_1$-$C_2$-Alkyl, $C_1$-$C_2$-Alkoxy, Carboxy und Chlor steht.

**3.** Verfahren gemäss Anspruch 1, dadurch gekennzeichnet, dass man ein Amin der Formel (4) verwendet, worin Z ein Rest der Formel (1e) ist, und $(R_6)_{1-3}$ entweder für einen Substituenten aus der Gruppe Aethyl, $C_1$-$C_2$-Alkoxy, Carboxy und Chlor, oder für 2 oder 3 Substituenten $R_6$, unabhängig voneinander, aus der Gruppe $C_1$-$C_2$-Alkyl, $C_1$-$C_2$-Alkoxy, Carboxy und Chlor steht.

4. Verfahren gemäss Anspruch 1, dadurch gekennzeichnet, dass man ein Amin der Formel (4) verwendet, worin Z ein Rest der Formel (1f) ist, $R_7$ die unter Formel (1) angegebene Bedeutung hat, und $(R_8)_{1-3}$ für 1 bis 3 Substituenten $R_8$, unabhängig voneinander, aus der Gruppe Wasserstoff, $C_1$-$C_2$-Alkyl, $C_1$-$C_2$-Alkoxy, Carboxy und Chlor steht.

5. Verfahren gemäss Anspruch 2, dadurch gekennzeichnet, dass man ein Amin der Formel (4) verwendet, worin Z ein Rest der Formel

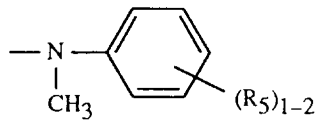

ist, und $(R_5)_{1-2}$ für 1 bis 2 Substituenten $R_5$, unabhängig voneinander, aus der Gruppe Wasserstoff, Methyl, Methoxy und Chlor steht.

6. Verfahren gemäss Anspruch 5, dadurch gekennzeichnet, dass man ein Amin der Formel (4) verwendet, worin Z ein Rest der Formel

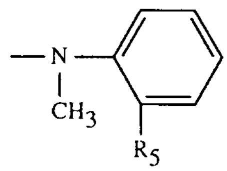

ist, und $R_5$ Wasserstoff oder Methyl bedeutet.

7. Verwendung der gemäss Anspruch 1 erhältlichen Reaktivfarbstoffe zum Färben oder Bedrucken von textilen Fasermaterialien.

8. Verwendung gemäss Anspruch 7 zum Färben oder Bedrucken von Baumwolle.

9. Lagerstabile, konzentrierte flüssige Farbstoffpräparationen von gemäss Anspruch 1 erhältlichen wasserlöslichen faserreaktiven Farbstoffen gemäss Anspruch 1.

**Claims**

**Claims for the following Contracting States : BE, CH, DE, FR, GB, IT, LI**

1. A reactive dye of formula

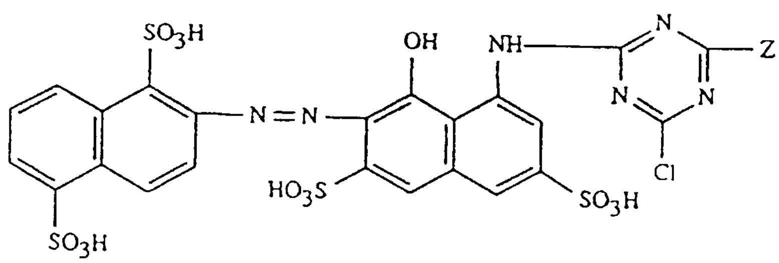

(1),

wherein Z is a radical of formula

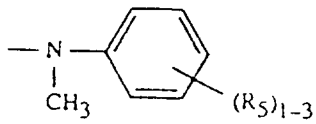 (1d), 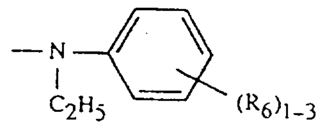 (1e) or

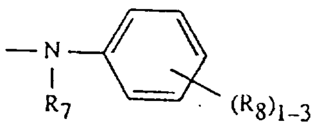 (1f)

$(R_5)_{1-3}$ denotes 1 to 3 substituents $R_5$, independent of one another, from the group consisting of hydrogen, $C_1$-$C_4$alkyl, $C_1$-$C_4$alkoxy, carboxyl and halogen, $(R_6)_{1-3}$ is either a substituent $R_6$ from the group consisting of $C_2$-$C_4$alkyl, $C_1$-$C_4$alkoxy, carboxyl and halogen, or denotes 2 or 3 substituents $R_6$, independent of one another, from the group consisting of $C_1$-$C_4$alkyl, $C_1$-$C_4$alkoxy, carboxyl and halogen, $R_7$ is $C_1$-$C_4$alkyl which is substituted by halogen, hydroxyl, cyano, carboxyl, $C_1$-$C_4$alkoxy, hydroxy-$C_2$-$C_4$alkoxy, sulfo or sulfato, and $(R_8)_{1-3}$ denotes 1 to 3 substituents $R_8$, independent of one another, from the group consisting of hydrogen, $C_1$-$C_4$alkyl, $C_1$-$C_4$alkoxy, carboxyl and halogen.

**2.** A reactive dye according to claim 1, wherein Z is a radical of formula (1d), and $(R_5)_{1-3}$ denotes 1 to 3 substituents $R_5$, independent of one another, from the group consisting of hydrogen, $C_1$-$C_2$alkyl, $C_1$-$C_2$alkoxy, carboxyl and chlorine.

**3.** A reactive dye according to claim 1, wherein Z is a radical of formula (1e), and $(R_6)_{1-3}$ is either a substituent from the group consisting of ethyl, $C_1$-$C_2$alkoxy, carboxyl and chlorine, or denotes 2 or 3 substituents $R_6$, independent of one another, from the group consisting of $C_1$-$C_2$alkyl, $C_1$-$C_2$alkoxy, carboxyl and chlorine.

**4.** A reactive dye according to claim 1, wherein Z is a radical of formula (1f), $R_7$ is as defined under formula (1), and $(R_8)_{1-3}$ denotes 1 to 3 substituents $R_8$, independent of one another, from the group consisting of hydrogen, $C_1$-$C_2$alkyl, $C_1$-$C_2$alkoxy, carboxyl and chlorine.

**5.** A reactive dye according to claim 2, wherein Z is a radical of formula

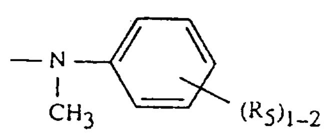

and $(R_5)_{1-2}$ denotes 1 to 2 substituents $R_5$, independent of one another, from the group consisting of hydrogen, methyl, methoxy and chlorine.

**6.** A reactive dye according to claim 5, wherein Z is a radical of formula

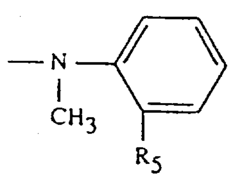

and $R_5$ is hydrogen or methyl.

**7.** A process for the preparation of a reactive dye of formula (1) according to claim 1, which comprises reacting, in any order, a diazotised diazo component of formula

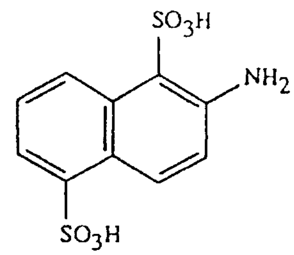

(2),

a coupling component of formula

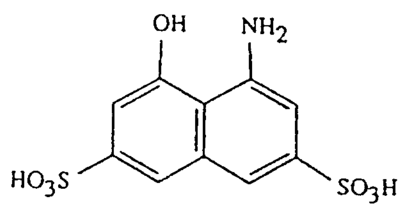

(3),

2,4,6-trichloro-s-triazine and an amine of formula

H-Z (4),

wherein Z is as defined in claim 1, by coupling and condensation, to give a reactive dye of formula (1).

**8.** The use of a reactive dye according to claim 1 for dyeing or printing textile fibre materials.

**9.** The use according to claim 8 for dyeing or printing cotton.

**10.** A storage-stable, concentrated, liquid formulation of a water-soluble fibre-reactive dye according to claim 1.

**Claims for the following Contracting State : ES**

**1.** A process for the preparation of a reactive dye of formula

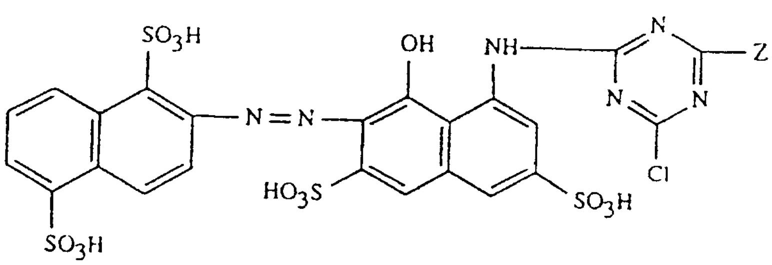

(1),

wherein Z is a radical of formula

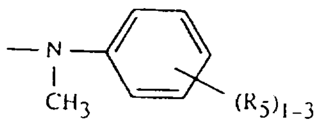 (1d), 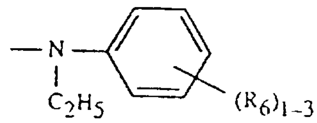 (1e) or

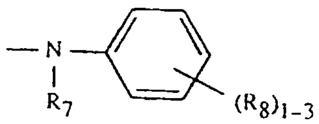 (1f)

$(R_5)_{1-3}$ denotes 1 to 3 substituents $R_5$, independent of one another, from the group consisting of hydrogen, $C_1$-$C_4$alkyl, $C_1$-$C_4$alkoxy, carboxyl and halogen, $(R_6)_{1-3}$ is either a substituent $R_6$ from the group consisting of $C_2$-$C_4$alkyl, $C_1$-$C_4$alkoxy, carboxyl and halogen, or denotes 2 or 3 substituents $R_6$, independent of one another, from the group consisting of $C_1$-$C_4$alkyl, $C_1$-$C_4$alkoxy, carboxyl and halogen, $R_7$ is $C_1$-$C_4$alkyl which is substituted by halogen, hydroxyl, cyano, carboxyl, $C_1$-$C_4$alkoxy, hydroxy-$C_2$-$C_4$alkoxy, sulfo or sulfato, and $(R_8)_{1-3}$ denotes 1 to 3 substituents $R_8$, independent of one another, from the group consisting of hydrogen, $C_1$-$C_4$alkyl, $C_1$-$C_4$alkoxy, carboxyl and halogen, which comprises reacting, in any order, a diazotised diazo component of formula

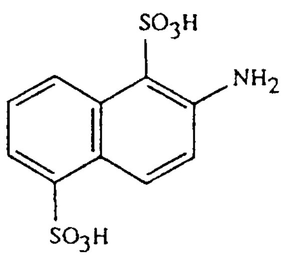

(2),

a coupling component of formula

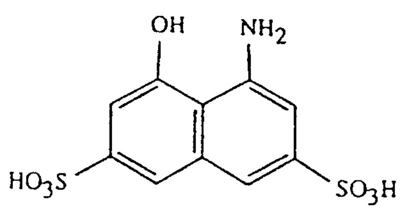

(3),

2,4,6-trichloro-s-triazine and an amine of formula

H-Z (4),

wherein Z is as defined above, by coupling and condensation, to give a reactive dye of formula (1).

**2.** A process according to claim 1, which comprises using an amine of formula (4) wherein Z is a radical of formula (1d), and $(R_5)_{1-3}$ denotes 1 to 3 substituents $R_5$, independent of one another, from the group consisting of hydrogen, $C_1$-$C_2$alkyl, $C_1$-$C_2$alkoxy, carboxyl and chlorine.

**3.** A process according to claim 1, which comprises using an amine of formula (4) wherein Z is a radical of formula (1e), and $(R_6)_{1-3}$ is either a substituent from the group consisting of ethyl, $C_1$-$C_2$alkoxy, carboxyl and chlorine, or denotes 2 or 3 substituents $R_6$, independent of one another, from the group consisting of $C_1$-$C_2$alkyl, $C_1$-$C_2$alkoxy, carboxyl and chlorine.

**4.** A process according to claim 1, which comprises using an amine of formula (4) wherein Z is a radical of formula (1f), $R_7$ is as defined under formula (1), and $(R_8)_{1-3}$ denotes 1 to 3 substituents $R_8$,

independent of one another, from the group consisting of hydrogen, $C_1$-$C_2$alkyl, $C_1$-$C_2$alkoxy, carboxyl and chlorine.

**5.** A process according to claim 2, which comprises using an amine of formula (4) wherein Z is a radical of formula

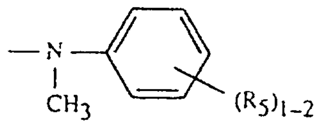

and $(R_5)_{1-2}$ denotes 1 to 2 substituents $R_5$, independent of one another, from the group consisting of hydrogen, methyl, methoxy and chlorine.

**6.** A process according to claim 5, which comprises using an amine of formula (4) wherein Z is a radical of formula

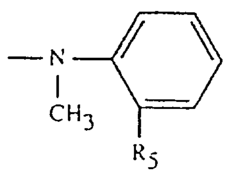

and $R_5$ is hydrogen or methyl.

**7.** The use of a reactive dye obtainable according to claim 1 for dyeing or printing textile fibre materials.

**8.** The use according to claim 7 for dyeing or printing cotton.

**9.** A storage-stable, concentrated, liquid formulation of a water-soluble fibre-reactive dye obtainable according to claim 1.

**Revendications**
**Revendications pour les Etats contractants suivants : BE, CH, DE, FR, GB, IT, LI**

**1.** Colorants réactifs de formule :

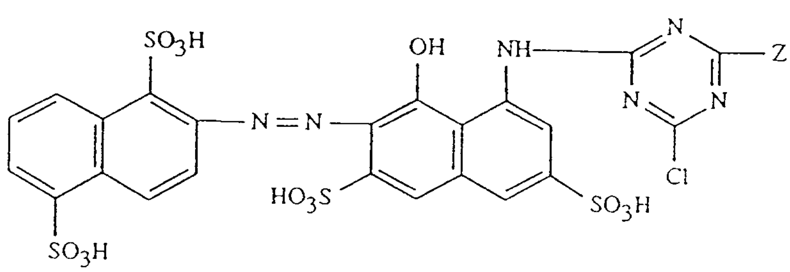

(1),

dans laquelle Z représente un groupe de formule :

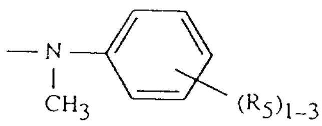 (1d), 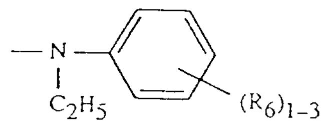 (1e) ou

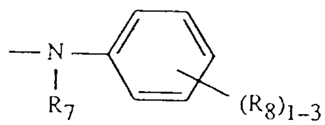 (1f)

où $(R_5)_{1-3}$ représente de 1 à 3 substituants $R_5$, choisis indépendamment les uns des autres dans l'ensemble que constituent les atomes d'hydrogène et d'halogène et les groupes alkyle en $C_{1-4}$, alcoxy en $C_{1-4}$ et carboxy, $(R_6)_{1-3}$ représente, soit 1 substituant $R_6$ choisi dans l'ensemble constitué par les groupes alkyle en $C_{2-4}$, alcoxy en $C_{1-4}$ et carboxy et les atomes d'halogène, soit 2 ou 3 substituants $R_6$, choisis indépendamment les uns des autres dans l'ensemble que constituent les groupes alkyle en $C_{1-4}$, alcoxy en $C_{1-4}$ et carboxy et les atomes d'halogène, $R_7$ représente un groupe alkyle en $C_{1-4}$ qui est substitué par un atome d'halogène ou par un groupe hydroxy, cyano, carboxy, alcoxy en $C_{1-4}$, hydroxyalcoxy en $C_{2-4}$, sulfo ou sulfato, et $(R_8)_{1-3}$représente de 1 à 3 substituants $R_8$, choisis indépendamment les uns des autres dans l'ensemble que constituent les atomes d'hydrogène et d'halogène et les groupes alkyle en $C_{1-4}$, alcoxy en $C_{1-4}$ et carboxy.

**2.** Colorants réactifs conformes à la revendication 1, dans lesquels Z représente un groupe de formule (1d), et $(R_5)_{1-3}$ représente de 1 à 3 substituants choisis, indépendamment les uns des autres, dans l'ensemble que constituent les atomes d'hydrogène et de chlore et les groupes alkyle en $C_{1-2}$, alcoxy en $C_{1-2}$ et carboxy.

**3.** Colorants réactifs conformes à la revendication 1, dans lesquels Z représente un groupe de formule (1e), et $(R_6)_{1-3}$ représente, soit 1 substituant choisi dans l'ensemble que constituent les groupes éthyle, alcoxy en $C_{1-2}$ et carboxy et l'atome de chlore, soit 2 ou 3 substituants $R_6$ choisis, indépendamment les uns des autres, dans l'ensemble que constituent les groupes alkyle en $C_{1-2}$, alcoxy en $C_{1-2}$ et carboxy et l'atome de chlore.

**4.** Colorants réactifs conformes à la revendication 1, dans lesquels Z représente un groupe de formule (1f), $R_7$ possède la signification indiquée à propos de la formule (1), et $(R_8)_{1-3}$ représente de 1 à 3 substituants $R_8$ choisis, indépendamment les uns des autres, dans l'ensemble que constituent les atomes d'hydrogène et de chlore et les groupes alkyle en $C_{1-2}$, alcoxy en $C_{1-2}$ et carboxy.

**5.** Colorants réactifs conformes à la revendication 2, dans lesquels Z représente un groupe de formule :

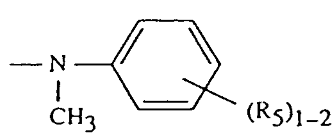

et $(R_5)_{1-2}$ représente 1 ou 2 substituants $R_5$ choisis, indépendamment l'un de l'autre, dans l'ensemble constitué par les atomes d'hydrogène et de chlore et par les groupes méthyle et méthoxy.

**6.** Colorants réactifs conformes à la revendication 5, dans lesquels Z représente un groupe de formule :

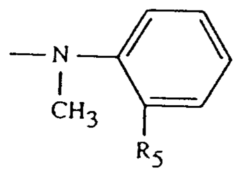

et $R_5$ représente un atome d'hydrogène ou un groupe méthyle.

**7.** Procédé de préparation de colorants réactifs de formule (1) conformes à la revendication 1, caractérisé en ce qu'on fait réagir par copulation et condensation, dans un ordre quelconque, un composant diazotable de formule :

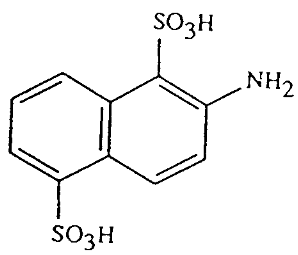

(2),

diazoté, un copulant de formule :

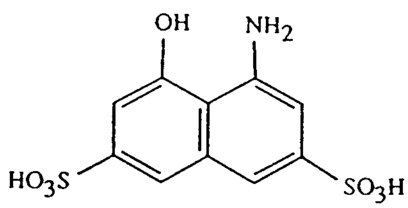

(3),

de la 2,4,6-trichloro-s-triazine et une amine de formule :

H-Z (4),

dans laquelle Z possède la signification indiquée dans la revendication 1, pour obtenir un colorant réactif de formule (1).

**8.** Utilisation des colorants réactifs conformes à la revendication 1, pour la teinture ou l'impression de matières fibreuses textiles.

**9.** Utilisation conforme à la revendication 8, pour la teinture ou l'impression de coton.

**10.** Préparations liquides de colorants, concentrées et stables au stockage, contenant des colorants hydrosolubles et réactifs vis-à-vis des fibres, conformes à la revendication 1.

**Revendications pour l'Etat contractant suivant :**

1. Procédé de préparation de colorants réactifs de formule :

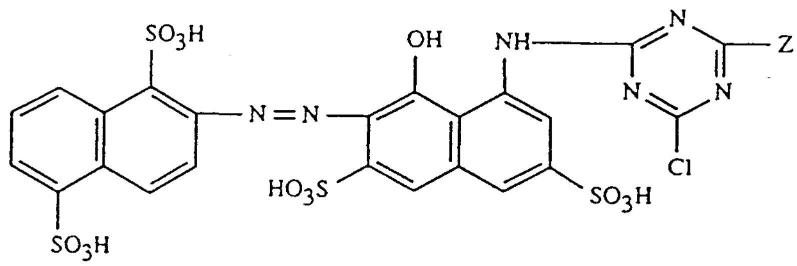

(1),

dans laquelle Z représente un groupe de formule :

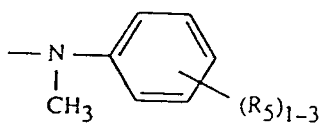

(1d),

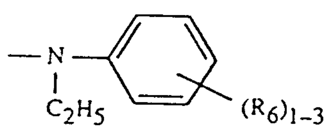

(1e) ou

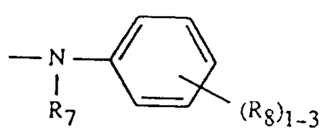

(1f)

où $(R_5)_{1-3}$ représente de 1 à 3 substituants $R_5$, choisis indépendamment les uns des autres dans l'ensemble que constituent les atomes d'hydrogène et d'halogène et les groupes alkyle en $C_{1-4}$, alcoxy en $C_{1-4}$ et carboxy, $(R_6)_{1-3}$ représente, soit 1 substituant $R_6$ choisi dans l'ensemble constitué par les groupes alkyle en $C_{2-4}$, alcoxy en $C_{1-4}$ et carboxy et les atomes d'halogène, soit 2 ou 3 substituants $R_6$, choisis indépendamment les uns des autres dans l'ensemble que constituent les groupes alkyle en $C_{1-4}$, alcoxy en $C_{1-4}$ et carboxy et les atomes d'halogène, $R_7$ représente un groupe alkyle en $C_{1-4}$ qui est substitué par un atome d'halogène ou par un groupe hydroxy, cyano, carboxy, alcoxy en $C_{1-4}$, hydroxyalcoxy en $C_{2-4}$, sulfo ou sulfato, et $(R_8)_{1-3}$ représente de 1 à 3 substituants $R_8$, choisis indépendamment les uns des autres dans l'ensemble que constituent les atomes d'hydrogène et d'halogène et les groupes alkyle en $C_{1-4}$, alcoxy en $C_{1-4}$ et carboxy, caractérisé en ce qu'on fait réagir par copulation et condensation, dans un ordre quelconque, un composant diazotable de formule :

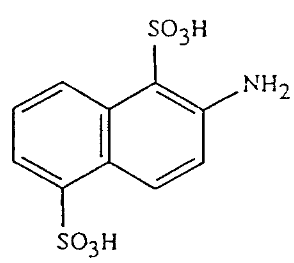

(2),

diazoté, un copulant de formule :

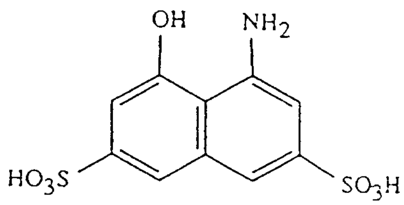

(3),

de la 2,4,6-trichloro-s-triazine et une amine de formule :

H-Z (4),

dans laquelle Z possède la signification indiquée dans la revendication 1, pour obtenir un colorant réactif de formule (1).

2. Procédé conforme à la revendication 1, caractérisé en qu'on utilise une amine de formule (4), dans laquelle Z représente un groupe de formule (1d), et $(R_5)_{1-3}$ représente de 1 à 3 substituants choisis, indépendamment les uns des autres, dans l'ensemble que constituent les atomes d'hydrogène et de chlore et les groupes alkyle en $C_{1-2}$, alcoxy en $C_{1-2}$ et carboxy.

3. Procédé conforme à la revendication 1, caractérisé en qu'on utilise une amine de formule (4), dans laquelle Z représente un groupe de formule (1e), et $(R_6)_{1-3}$ représente, soit 1 substituant choisi dans l'ensemble que constituent les groupes éthyle, alcoxy en $C_{1-2}$ et carboxy et l'atome de chlore, soit 2 ou 3 substituants $R_6$ choisis, indépendamment les uns des autres, dans l'ensemble que constituent les groupes alkyle en $C_{1-2}$, alcoxy en $C_{1-2}$ et carboxy et l'atome de chlore.

4. Procédé conforme à la revendication 1, caractérisé en qu'on utilise une amine de formule (4), dans laquelle Z représente un groupe de formule (1f), $R_7$ possède la signification indiquée à propos de la formule (1), et $(R_8)_{1-3}$ représente de 1 à 3 substituants $R_8$ choisis, indépendamment les uns des autres, dans l'ensemble que constituent les atomes d'hydrogène et de chlore et les groupes alkyle en $C_{1-2}$, alcoxy en $C_{1-2}$ et carboxy.

5. Procédé conforme à la revendication 2, caractérisé en ce qu'on utilise une amine de formule (4) dans laquelle Z représente un groupe de formule :

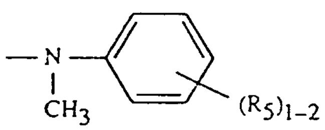

et $(R_5)_{1-2}$ représente 1 ou 2 substituants $R_5$ choisis, indépendamment l'un de l'autre, dans l'ensemble constitué par les atomes d'hydrogène et de chlore et par les groupes méthyle et méthoxy.

6. Procédé conforme à la revendication 5, caractérisé en ce qu'on utilise une amine de formule (4) dans laquelle Z représente un groupe de formule :

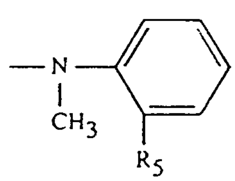

et $R_5$ représente un atome d'hydrogène ou un groupe méthyle.

7. Utilisation des colorants réactifs que l'on peut obtenir conformément à la revendication 1, pour la teinture ou l'impression de matières fibreuses textiles.

**8.** Utilisation conforme à la revendication 7, pour la teinture ou l'impression de coton.

**9.** Préparations liquides de colorants, concentrées et stables au stockage, de colorants réactifs vis-à-vis des fibres et hydrosolubles, obtenus conformément à la revendication 1.